# EUROPÄISCHE PATENTSCHRIFT

(11) **EP 3 868 016 B1**
(45) Veröffentlichungstag und Bekanntmachung des Hinweises auf die Patenterteilung: **27.11.2024**
(21) Anmeldenummer: 19829092.6
(22) Anmeldetag: 17.12.2019
(51) Int. Cl.: H02P 27/14, H02P 1/16, H02M 7/483, H02M 1/32

(54) **BETREIBEN VON SCHALTELEMENTEN EINES MEHRPEGELENERGIEWANDLERS**
OPERATION OF SWITCHING ELEMENTS OF A MULTI-LEVEL ENERGY CONVERTER
FONCTIONNEMENT DES ÉLÉMENTS DE COMMUTATION D'UN CONVERTISSEUR D'ÉNERGIE MULTINIVEAU

(30) Priorität: 22.01.2019 EP 19153054
(43) Veröffentlichungstag der Anmeldung: 25.08.2021
(73) Patentinhaber: Siemens Aktiengesellschaft, 80333 München (DE)
(72) Erfinder: KRAUS, Ludwig, 94099 Ruhstorf (DE)
(74) Vertreter: Siemens Patent Attorneys
(86) Internationale Anmeldenummer: PCT/EP2019/085600
(87) Internationale Veröffentlichungsnummer: WO 2020/151883

(56) Entgegenhaltungen:
- EP-A1- 2 849 331
- EP-A1- 2 849 331
- WO-A1-02/23703
- WO-A1-02/23703
- WO-A1-2019/137916
- US-A1- 2005 071 090
- US-A1- 2005 071 090
- BINBIN LI ET AL: "An Improved Circulating Current Injection Method for Modular Multilevel Converters in Variable-Speed Drives", IEEE TRANSACTIONS ON INDUSTRIAL ELECTRONICS., vol. 63, no. 11, 1 November 2016 (2016-11-01), USA, pages 7215 - 7225, XP055600388, ISSN: 0278-0046, DOI: 10.1109/TIE.2016.2547899
- BINBIN LI ET AL: "An Improved Circulating Current Injection Method for Modular Multilevel Converters in Variable-Speed Drives", IEEE TRANSACTIONS ON INDUSTRIAL ELECTRONICS., vol. 63, no. 11, 1 November 2016 (2016-11-01), USA, pages 7215 - 7225, XP055600388, ISSN: 0278-0046, DOI: 10.1109/TIE.2016.2547899

## Beschreibung

Die Erfindung betrifft ein Verfahren zum Betreiben von Schaltelementen eines wenigstens drei elektrische Potentiale nutzenden Mehrpegelenergiewandlers, an dem eine mehrphasige elektrische Maschine angeschlossen ist, wobei Schaltelemente des Mehrpegelenergiewandlers mittels entsprechender Schaltsignale in einem vorgegebenen Taktbetrieb betrieben werden, wobei die Schaltsignale für die einer jeweiligen der Phasen zugeordneten Schaltelemente abhängig von einem jeweiligen Sollspannungssignal ermittelt werden, um jede Phase der mehrphasigen elektrischen Maschine mit einer jeweiligen Phasenspannung zu beaufschlagen. Weiterhin betrifft die Erfindung eine Steuereinheit zum Steuern von Schaltelementen eines wenigstens drei elektrische Potentiale nutzenden Mehrpegelenergiewandlers, der zum Anschließen an eine mehrphasige elektrische Maschine ausgebildet ist, wobei die Steuereinheit ausgebildet ist, die Schaltelemente des Mehrpegelenergiewandlers mittels entsprechender Schaltsignale in einem vorgegebenen Taktbetrieb zu betreiben, zu welchem Zweck die Steuereinheit die Schaltsignale für die einer jeweiligen der Phasen zugeordneten Schaltelemente abhängig von einem jeweiligen Sollspannungssignal ermittelt, um jede Phase der mehrphasigen elektrische Maschine mit einer jeweiligen Phasenspannung zu beaufschlagen. Weiterhin betrifft die Erfindung einen Mehrpegelenergiewandler, der zum Anschließen an eine mehrphasige elektrische Maschine ausgebildet ist und der wenigstens drei elektrische Potentiale nutzt, mit Schaltelementen zum Beaufschlagen von jeder Phase der mehrphasigen elektrischen Maschine mit einer jeweiligen Phasenspannung, und einer Steuereinheit zum Steuern der Schaltelemente in einem vorgegebenen Taktbetrieb mittels entsprechender Schaltsignale. Schließlich betrifft die Erfindung auch eine Antriebseinrichtung mit einer mehrphasigen elektrischen Maschine und einem an die mehrphasige elektrische Maschine angeschlossenen Mehrpegelenergiewandler, der wenigstens drei elektrische Potentiale nutzt. Verfahren zum Betreiben von Schaltelementen eines Mehrpegelenergiewandlers, Steuereinheiten hierfür, Mehrpegelenergiewandler mit Steuereinheiten sowie auch Antriebseinrichtungen der gattungsgemäßen Art sind im Stand der Technik umfänglich bekannt, sodass es eines gesonderten druckschriftlichen Nachweises hierfür nicht bedarf. Mehrpegelenergiewandler sind spezifische Energiewandler, die zum Zwecke des Durchführens der Energiewandlungsfunktion mehrere elektrische Potentiale nutzen, die zum Beispiel durch einen oder mehrere Gleichspannungszwischenkreise bereitgestellt sein können. Die Erfindung richtet sich insbesondere an solche Mehrpegelenergiewandler, die wenigstens drei elektrische Potentiale nutzen, um die gewünschte Energiewandlungsfunktion zu realisieren.

Derartige Mehrpegelenergiewandler werden häufig im Bereich der Energieversorgung beziehungsweise bei Leistungsantrieben eingesetzt. Vorzugsweise werden solche Mehrpegelenergiewandler bidirektional betrieben, sodass sowohl elektrische Energie von der Wechselspannungsseite zur Gleichspannungsseite als auch umgekehrt gewandelt werden kann.

Bekannt ist ein Mehrpegelenergiewandler beispielsweise aus der WO 02/23703 A1.

Aus der US 2005/071090 A1 ist die Abschätzung von Temperaturveränderungen in Halbleitern offenbart.

Die EP 2 849 331 A1 hat zum Ziel, die Spannung über einen kapazitiven Spannungsteiler eines Mehrpegelenergiewandlers zu balancieren. Hierdurch wird eine Spannungsdifferenz an dem Neutralpunkt ausgeglichen.

Die Druckschrift "An Improved Circulating Current Injection Method for Modular Multilevel Converters in Variable-Speed Drives" (IEEE TRANSACTIONS ON INDUSTRIAL, ELECTRON I CS.,Bd. 63, Nr. 11, 1. November 2016 (2016-11-01), Seiten 7215-7225, XP055600388, USA) beschäftigt sich mit der Unterdrückung von Rippelspannungen in Kondensatoren beziehungsweise mit der Verringerung der notwendigen Kapazitäten eines Mehrpegelenergiewandlers. Ziel ist es hierbei, Schwankungen der Kondensatorspannung innerhalb eines bestimmten Toleranzintervalls zu halten, wofür ein entsprechender Leistungsaustausch nötig sei. Eine entsprechende common-mode-Spannung findet nur bis zu einer Grenzfrequenzanwendung.

Die WO2019137916 A1 offenbart ein Verfahren zum Steuern eines elektrischen Wandlers, wobei der elektrische Wandler zum Umwandeln einer Gleichspannung in eine Mehrphasenspannung mit mindestens zwei Spannungspegeln ausgelegt ist.

Mehrpegelenergiewandler werden in der Regel dazu eingesetzt, einen oder mehrere Gleichspannungszwischenkreise mit einem Wechselstromnetz, insbesondere einem mehrphasigen Wechselstromnetz, zu koppeln. Häufig ist das Wechselspannungsnetz durch eine entsprechende mehrphasige elektrische Maschine bereitgestellt. Der Mehrpegelenergiewandler ist diesbezüglich an die mehrphasige elektrische Maschine angepasst, sodass jede der Phasen der elektrischen Maschine entsprechend mit elektrischer Energie beaufschlagt werden kann.

Mehrphasige elektrische Maschinen sind im Stand der Technik ebenfalls umfänglich bekannt. Diese werden im Stand der Technik für eine Vielzahl von Anwendungen eingesetzt, bei denen mittels der mehrphasigen elektrischen Maschine spezifische Antriebsfunktionen realisiert werden sollen. Besonders verbreitet ist die Nutzung von dreiphasigen elektrischen Maschinen, die - je nach Anwendung - sogar unmittelbar mit einem dreiphasigen öffentlichen Energieversorgungsnetz gekoppelt werden können, um die gewünschte Antriebsfunktion bereitzustellen. Die Steuerungsmöglichkeiten sind in einem derartigen Szenario jedoch begrenzt, weshalb die mehrphasigen elektrischen Maschinen mittlerweile in der Regel über jeweilige individuell zugeordnete Energiewandler, insbesondere Wechselrichter, betrieben werden. Dies erlaubt es zugleich, für den bestimmungsgemäßen Betrieb der elektrischen Maschine erforderliche elektrische Energie auch aus einem elektrischen Energiespeicher, beispielsweise eine Batterie, insbesondere einer Hochvolt-Batterie, einer Fotovoltaikeinrichtung und/oder dergleichen, bereitzustellen. Dadurch können zum Beispiel Antriebseinrichtungen bereitgestellt werden, welche nicht nur für stationäre Anwendungen, sondern auch für einen mobilen Einsatz, beispielsweise bei Kraftfahrzeugen, geeignet sind. Auch eine Vielzahl weiterer Anwendungen kann auf diese Weise realisiert werden.

Insbesondere wenn der Mehrpegelenergiewandler als Wechselrichter ausgebildet ist, ist es möglich, die mehrphasige elektrische Maschine in flexibler Weise zu steuern, und zwar auch dann, wenn die elektrische Maschine mehr als drei Phasen aufweist, beispielsweise vier Phasen, fünf Phasen, sechs Phasen oder sogar noch mehr Phasen. Auch wenn eine Anwendung von dreiphasigen Maschinen derzeit überwiegt beziehungsweise sehr verbreitet ist, kann es jedoch besonders bei spezifischen Anwendungen sinnvoll sein, dass die elektrische Maschine mehr als drei Phasen aufweist, so zum Beispiel bei Schiffsantrieben oder dergleichen. Die elektrische Maschine kann beispielsweise als Synchronmaschine, als Asynchronmaschine oder dergleichen ausgebildet sein. Derartige elektrische Maschinen sind in der Regel dazu ausgebildet, mit Wechselspannung beaufschlagt zu werden.

Die Nutzung insbesondere eines Wechselrichters zum Betreiben einer mehrphasigen elektrischen Maschine eröffnet die Möglichkeit, die mehrphasige elektrische Maschine in einer sehr dynamischen Weise zu betreiben. Die mehrphasige elektrische Maschine ist in der Regel als rotierende elektrische Maschine ausgebildet, die einen als Stator ausgebildeten Ständer aufweist, der in der Regel eine im Wesentlichen kreisförmige Öffnung zur Aufnahme eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Die rotierende elektrische Maschine ist eine Vorrichtung, die elektrische Energie in mechanische Energie, insbesondere in Bewegungsenergie in einem Motorbetrieb und/oder mechanische Energie in eine elektrische Energie in einem Generatorbetrieb umformt. Bei der Bewegung handelt es sich in der Regel um eine Drehbewegung, die der Läufer ausführt. Der Ständer ist im Unterschied zum Läufer in der Regel drehfest angeordnet, das heißt, bei einer Drehbewegung handelt es sich um eine Drehbewegung des Läufers gegenüber dem Ständer.

Der Ständer und der Läufer der rotierenden elektrischen Maschine sind mittels eines magnetischen Flusses verkettet, wodurch im Motorbetrieb die Kraftwirkung beziehungsweise das Drehmoment erzeugt wird, die den Läufer gegenüber dem Ständer drehend antreibt. Im Generator wird dem Läufer zugeführte mechanische Energie beziehungsweise ein zugeführtes Drehmoment in Form einer Rotation in elektrische Energie umgewandelt. Zu diesem Zweck weist der Ständer jeweils eine entsprechend mehrphasige Wicklung auf, die von jeweiligen Phasenströmen durchflossen ist. Im Ständer beziehungsweise im Läufer kann die Wicklung auch durch einen Permanentmagneten ersetzt oder zumindest teilweise ergänzt sein.

Rotierende elektrische Maschinen der gattungsgemäßen Art sind beispielsweise Drehfeldmaschinen, die an ein entsprechendes mehrphasiges, insbesondere dreiphasiges, elektrisches Wechselspannungsnetz angeschlossen sind, beispielsweise Asynchronmaschinen, Synchronmaschinen, Synchronmaschinen mit Dämpferkäfig oder dergleichen. Das Wechselspannungsnetz wird vorzugsweise durch den Wechselrichter bereitgestellt.

Der Ständer und der Läufer weisen in der Regel eine magnetisch aktive Einheit auf, die neben den jeweiligen Wicklungen zumindest auch jeweilige Blechpakete umfassen können. Ein Blechpaket ist in der Regel aus einzelnen, untereinander elektrisch isolierten ferromagnetischen Blechen ausgebildet. Die Bleche können je nach Verwendungszweck als Dynamoblech, Motorenblech, Transformatorenblech oder dergleichen bezeichnet sein. Derartige Bleche unterliegen der Normung, beispielsweise der EM 10106, EM 10107 oder dergleichen.

Bei dem Betrieb von Wechselrichtern, insbesondere wenn sie als Mehrpegelenergiewandler ausgebildet sind, entstehen unter anderem Verluste durch den Schaltbetrieb der Schaltelemente.

Darüber hinaus ergeben sich auch Durchlassverluste bei den Schaltelementen, wenn sie im eingeschalteten Schaltzustand sind und mit einem jeweiligen elektrischen Strom beaufschlagt sind. Die Schaltsignale zum Steuern der Schaltelemente werden häufig im Rahmen einer Pulsweitenmodulation (PWM) mittels einer Steuereinheit erzeugt und bereitgestellt. Die Steuereinheit kann vom jeweiligen Mehrpegelenergiewandler umfasst sein. Sie kann jedoch auch zumindest teilweise durch eine übergeordnete Steuerung, beispielsweise einer Steuerung der Antriebseinrichtung oder dergleichen, bereitgestellt sein.

Bei der Pulsweitenmodulation werden in einem gegenüber einer Grundschwingungsperiode kurzen Zeitbereich beziehungsweise einer Taktrate, auch PWM-Periode genannt, zwei Gleichspannungspotentiale in einem derartigen zeitlichen Verhältnis (Tastverhältnis) als Schaltsignal bereitgestellt, dass die über die PWM-Periode gemittelte Spannung etwa einer gewünschten Phasenspannung zu einem jeweiligen Zeitpunkt der PWM-Periode entspricht. Der jeweilige Phasenstrom stellt sich entsprechend ein.

Der zeitliche Verlauf des vorgenannten Mittelwertes der jeweiligen Phasenspannung ist maßgeblich für die Ausbildung eines jeweiligen Phasenstroms in Bezug auf eine Grundschwingung der Frequenz der Phasenspannung.

Mehrpegelenergiewandler, bei denen ein jeweiliger Phasenanschluss mit einem von drei elektrischen Potentialen mittels jeweiliger Schaltelemente gekoppelt werden kann, werden auch Drei-Level-Wechselrichter oder auch Dreipunkt-Wechselrichter genannt.

Der Phasenstrom kann sich entsprechend der Differenz zwischen der von Energiewandler bereitgestellten Phasenspannung und einer inneren Spannung der elektrischen Maschine ausbilden Je näher ein aktueller Wert einer jeweiligen Phasenspannung bei einem der zur Verfügung stehenden elektrischen Potentiale liegt, desto länger wird der jeweilige Phasenanschluss in einer entsprechenden PWM-Periode mit diesem elektrischen Potential verbunden. Werden beispielsweise kleine Phasenspannungen bereitgestellt, kann dauerhaft eine Nähe in Bezug auf das mittlere elektrische Potential bei einem Dreipunkt-Wechselrichter die Folge sein. Daher ist in einem derartigen Betriebszustand ein sogenannter Mittelpunktpfad, das heißt, das Schaltelement zwischen dem Phasenanschluss und dem mittleren der elektrischen Potentiale des Wechselrichters, verhältnismäßig lang eingeschaltet. Dadurch können dort große Durchlassverluste entstehen. Zusätzlich sind jedoch auch Schaltverluste aufgrund der notwendigen Schaltvorgänge zu den jeweiligen anderen elektrischen Potentialen zu berücksichtigen.

Bei vielen praktischen Anwendungen, beispielsweise bei Nutzung von Asynchronmaschinen, besteht ein näherungsweise proportionaler Zusammenhang zwischen einer jeweiligen Phasenspannung in Bezug auf die Grundschwingung und die jeweilige Frequenz der Grundschwingung. Insbesondere kann dies dazu führen, dass bei kleinen Phasenspannungen dann auch die entsprechende Frequenz niedrig ist, das heißt, eine Zeitdauer der Grundschwingungsperiode ist entsprechend lang. Dies kann dazu führen, dass im Mittelpunktpfad die Durchlassverluste über einen langen Zeitraum gegenüber einem Pluspfad und/oder einem Minuspfad auftreten können und so zu einer großen thermischen Belastung sowie auch entsprechenden großen Temperaturwechseln der betroffenen Schaltelemente des Mittelpunktpfads führen können.

Ein Schaltelement im Sinne dieser Offenbarung ist dabei vorzugsweise ein steuerbares elektronisches Schaltelement, beispielsweise ein steuerbarer elektronischer Halbleiterschalter wie ein Transistor, der in einem Schaltbetrieb betrieben wird, ein Thyristor, Kombinationsschaltungen davon, vorzugsweise mit parallelgeschalteten Inversdioden, ein Gate-turnoff-Thyristor (GTO), ein Insulated-Gate-Bipolar-Transistor (IGBT), Kombinationen hiervon oder dergleichen. Dem Grunde nach kann das Schaltelement jedoch auch durch einen Feldeffekttransistor, insbesondere einen Metalloxide-Semiconductor-Field-Effect-Transistor (MOSFET) gebildet sein.

Zur Bereitstellung der gewünschten Energiewandlungsfunktionalität des Mehrpegelenergiewandlers beziehungsweise des Wechselrichters werden die Schaltelemente im Schaltbetrieb betrieben. In Bezug auf einen Halbleiterschalter unter Nutzung eines Transistors bedeutet der Schaltbetrieb, dass in einem eingeschalteten Schaltzustand zwischen den eine Schaltstrecke bildenden Anschlüssen des Transistors ein sehr kleiner elektrischer Widerstand bereitgestellt wird, sodass ein hoher Stromfluss bei sehr kleiner Restspannung möglich ist. In einem ausgeschalteten Schaltzustand ist hingegen die Schaltstrecke des Transistors hochohmig, das heißt, sie stellt einen hohen elektrischen Widerstand bereit, sodass auch bei hoher, an der Schaltstrecke anliegender elektrischer Spannung im Wesentlichen kein oder nur ein sehr geringer, insbesondere vernachlässigbarer, Stromfluss vorliegt. Hiervon unterscheidet sich ein Linearbetrieb bei Transistoren, der aber bei Mehrpegelenergiewandlern beziehungsweise Wechselrichtern der gattungsgemäßen Art in der Regel nicht zum Einsatz kommt. Beim Wechsel vom eingeschalteten zum ausgeschalteten Schaltzustand muss sich der über das Schaltelement fließende Strom abbauen und sich die am Schaltelement anliegende Spannung aufbauen. Durch das gleichzeitige Auftreten von Spannung und Strom entsteht während dieser Übergangszeit eine Verlustenergie.

Ebenso entsteht Verlustenergie beim Übergang vom ausgeschalteten zum eingeschalteten Schaltzustand.

Das Schaltelement weist zur Realisierung der Schaltfunktionalität wenigstens einen Steueranschluss auf, an dem es mit dem von dem Taktgeber bereitgestellten Schaltsignal beaufschlagbar ist, so dass die gewünschte Schaltfunktion des Schaltelements realisiert werden kann. Das Schaltsignal kann ein binäres Schaltsignal sein, welches zwei Zustandswerte einnehmen kann, um die gewünschten Schaltfunktionen des Schaltelements bereitstellen zu können. Beispielsweise kann das Schaltsignal durch eine Impulsfolge gebildet sein, mittels der der Steueranschluss beaufschlagt wird. Dies ist vor allem bei Thyristoren und GTO zweckmäßig. Darüber hinaus kann bei Transistoren vorgesehen sein, dass das Schaltsignal als Rechtecksignal ausgebildet ist, wobei ein jeweiliger Schaltzustand des Schaltelements einem der elektrischen Potentiale des Rechtecksignals zugeordnet werden kann. Ein solches Signal ist beispielsweise für Transistoren, insbesondere für bipolare Transistoren, Feldeffekttransistoren oder dergleichen zweckmäßig. Ein zeitliches Verhältnis der beiden elektrischen Potentiale bestimmt in der Regel das Tastverhältnis.

Die Steuereinheit stellt die Funktionalität in Bezug auf das Erzeugen der Schaltsignale bereit. Auch weitere Funktionen, insbesondere in Bezug auf den Betrieb des Mehrpegelenergiewandlers beziehungsweise Wechselrichters, können durch die Steuereinheit realisiert sein, beispielsweise Überwachungsfunktionen, Sicherheitsfunktionen und/oder dergleichen. Zu diesem Zweck kann die Steuereinheit eine Hardwareschaltung und/oder eine programmgesteuerte Rechnereinheit oder dergleichen umfassen. Natürlich kann die Steuereinheit als eine separate Baugruppe ausgebildet sein. Die Steuereinheit kann jedoch auch zumindest teilweise von der übergeordneten Steuerung, beispielsweise einer Steuerung für die Antriebseinrichtung oder dergleichen, umfasst sein.

Der Mehrpegelenergiewandler ist durch eine elektronische Hardwareschaltung gebildet, die entsprechend der Anzahl der Phasen der mehrphasigen elektrischen Maschine Schaltelemente aufweist, mittels denen eine jeweilige der Phasen der elektrischen Maschine mit jeweiligen elektrischen Potentialen des Mehrpegelenergiewandlers elektrisch gekoppelt werden kann. Zu diesem Zweck umfasst der Mehrpegelenergiewandler entsprechende Phasenanschlüsse, an die die elektrische Maschine angeschlossen werden kann. Durch geeignete Impulsmuster der Schaltsignale gemäß der Pulsweitenmodulation kann die gewünschte energietechnische Kopplung erreicht werden. Die grundlegenden diesbezüglichen Betriebsverfahren sind dabei bekannt, weshalb diesbezüglich hierzu nicht weiter ausgeführt wird. Für den bestimmungsgemäßen Betrieb der Energiewandlung ist in der Regel die Taktrate der Schaltsignale erheblich größer als die Frequenz beziehungsweise die Grundfrequenz der Phasenwechselströme beziehungsweise der Phasenspannungen.

Die Schaltelemente sollen im bestimmungsgemäßen Betrieb eine maximale Bemessungstemperatur nicht überschreiten. Oberhalb der Bemessungstemperatur kann der zuverlässige Betrieb der Schaltelemente nicht mehr gewährleistet werden. Störungen und/oder Ausfälle der Schaltelemente können die Folge sein.

Darüber hinaus ist zu beachten, dass zyklische Temperaturänderungen auch bereits unterhalb der Bemessungstemperatur zu einer Alterung der Schaltelemente, insbesondere wenn sie als Halbleiterschaltelement ausgebildet sind, führen können. Derartige Temperaturhübe können zum Beispiel im Verlauf einer jeweiligen Grundschwingungsperiode der Frequenz der Grundschwingung der Phasenwechselströme beziehungsweise Phasenspannungen entsprechend auftreten. Auch dies kann zu einem Ausfall der Schaltelemente führen. Insbesondere bei einem Dreipunkt-Wechselrichter kann die Bereitstellung von Phasenspannungen mit kleiner Amplitude bei gleichzeitig kleiner Grundfrequenz eine ungünstige thermische Beanspruchung des Mittelpunktpfads führen, sodass insgesamt eine große Alterung zumindest in Bezug auf den Mittelpunktpfad die Folge ist.

Der Erfindung liegt die Aufgabe zugrunde, ein gattungsgemäßes Verfahren, eine Steuereinheit, einen Mehrpegelenergiewandler sowie eine Antriebseinrichtung dahingehend weiterzubilden, dass eine verbesserte thermische Belastung der Schaltelemente, insbesondere in einem Teillastbetrieb, erreicht werden kann.

Als Lösung werden mit der Erfindung ein Verfahren, eine Steuereinheit, ein Mehrpegelenergiewandler sowie eine Antriebseinrichtung gemäß den unabhängigen Ansprüchen vorgeschlagen.

Vorteilhafte Weiterbildungen ergeben sich durch Merkmale der abhängigen Ansprüche.

Bezüglich eines gattungsgemäßen Verfahrens wird insbesondere vorgeschlagen, dass die Schaltsignale ergänzend abhängig von einem vorgegebenen Überlagerungsspannungssignal derart ermittelt werden, dass den jeweiligen Phasenspannungen eine vom Überlagerungsspannungssignal abhängige Überlagerungsspannung überlagert wird.

In Bezug auf eine gattungsgemäße Steuereinheit wird insbesondere vorgeschlagen, dass die Steuereinheit ferner ausgebildet ist, die Schaltsignale ergänzend abhängig von einem vorgegebenen Überlagerungsspannungssignal zu ermitteln, um den jeweiligen Phasenspannungen eine vom Überlagerungsspannungssignal abhängige Überlagerungsspannung zu überlagern.

Bezüglich eines gattungsgemäßen Mehrpegelenergiewandlers wird insbesondere vorgeschlagen, dass dieser eine Steuereinheit gemäß der Erfindung umfasst.

In Bezug auf eine gattungsgemäße Antriebseinrichtung wird insbesondere vorgeschlagen, dass diese einen Mehrpegelenergiewandler gemäß der Erfindung umfasst.

Die Erfindung basiert auf dem Gedanken, dass durch eine Potentialverschiebung der Phasenspannungen die Beanspruchung der Schaltelemente, insbesondere bei kleinen Amplituden der Phasenspannungen sowie kleinen Grundfrequenzen der Phasenspannungen beziehungsweise im Teillastbereich, besser auf sämtliche Schaltelemente des Mehrpegelenergiewandlers verteilt wird. Dies wird dadurch erreicht, dass einer jeweiligen der Phasenspannungen die Überlagerungsspannung überlagert wird. Die Überlagerungsspannung ist vorzugsweise für sämtliche der Phasenspannungen gleich groß. Da die mehrphasige elektrische Maschine in der Regel erdfrei an den Mehrpegelenergiewandler angeschlossen ist, braucht dies zu keiner Änderung hinsichtlich der Betriebseigenschaften der elektrischen Maschine zu führen.

Dieses Prinzip ist weder auf die Nutzung von drei elektrischen Potentialen durch den Mehrpegelenergiewandler noch auf die Anwendung bei dreiphasigen elektrischen Maschinen beschränkt. Der Mehrpegelenergiewandler kann also auch vier unterschiedliche elektrische Potentiale, fünf elektrische Potentiale oder sogar noch mehr unterschiedliche elektrische Potentiale nutzen. Bei der mehrphasigen elektrischen Maschine kommt es auf die Anzahl der Phasen ebenfalls nicht an. Es wird mit der Erfindung also eine einfache Möglichkeit bereitgestellt, mit der eine gleichmäßigere Belastung der Schaltelemente erreicht werden kann, ohne dass weitere Nachteile in Kauf genommen zu werden brauchen.

Beispielsweise könnte auch die Taktrate reduziert werden. Die Absenkung der Taktrate erlaubt es zwar, Schaltverluste der Schaltelemente zu reduzieren, führt aber dazu, dass ein sogenannter Rippelstrom und dessen Auswirkungen größer werden. Der Rippelstrom wird durch eine Differenz zwischen der Phasenspannung und der vom Mehrpegelenergiewandler beziehungsweise Wechselrichter tatsächlich bereitgestellten Ausgangsspannung innerhalb einer PWM-Periode am jeweiligen Phasenanschluss bewirkt und ist dem tatsächlichen Phasenwechselstrom überlagert. Dies kann zu höheren Verlusten, höheren Temperaturen und Geräuschen bei der angeschlossen mehrphasigen elektrischen Maschine sowie gegebenenfalls weiteren unerwünschten Nebenwirkungen führen.

Darüber hinaus könnte der Phasenwechselstrom auch reduziert werden. Dadurch könnten neben den Schaltverlusten auch die Durchlassverluste der Schaltelemente reduziert werden. Jedoch ist hierbei natürlich auch eine reduzierte Leistung die Folge, die bei der elektrischen Maschine ein entsprechend reduziertes Drehmoment zur Folge hat.

Darüber hinaus könnten auch Taktungslücken bei den Schaltsignalen in Betracht gezogen werden. Bei den Taktungslücken handelt es sich um Zeiträume innerhalb einer jeweiligen Periode der Grundschwingung beziehungsweise Grundfrequenz, bei denen in einer jeweiligen Phase keine Schaltvorgänge der Schaltelemente vorgenommen werden. Für eine gleichmäßige Belastung der Schaltelemente müssten die Taktungslücken jedoch zyklisch zwischen allen Schaltelementen wechseln. Derartige Impulsmuster werden auch diskontinuierlich bezeichnet. Nachteilig hierbei erweist sich jedoch, dass die Phasenwechselströme ungünstigere Spektra aufweisen. Beispielsweise kann die wirksame Frequenz einer verketteten Spannung zwischen der doppelten Impulsfrequenz einer jeweiligen Phase, wenn beide beteiligten Phasen schalten, und der einfachen Impulsfrequenz wechseln, wenn eine der beiden Phasen eine Taktungslücke aufweist. Dadurch steigt auch der dem Phasenwechselstrom überlagerte Rippelstrom.

Darüber hinaus erweist sich die hierbei in der Regel entstehende Common-Mode-Spannung als nachteilig, bei der zum Beispiel nach jeweils einem Sechstel einer Grundschwingungsperiode sämtliche Phasenspannungen gegenüber einem Bezugspotential wie dem Erdpotential springen können. Derartige Spannungssprünge erfolgen abwechselnd in beide Richtungen und ihre Höhe entspricht einer Gleichspannung und ihre Steilheit ist in der Regel abhängig von der Schaltgeschwindigkeit der Schaltelemente. In Verbindung mit parasitären Kapazitäten, beispielsweise zwischen der Wicklung der mehrphasigen elektrischen Maschine und einem geerdeten Gehäuse der elektrischen Maschine können vergleichsweise große Gleichtaktströme die Folge sein, die zugleich auch entsprechende Störungen in Bezug auf die elektromagnetische Verträglichkeit (EMV) zur Folge haben können.

Diese Nachteile können durch das erfindungsgemäße Verfahren vermieden werden. Dabei wird ausgenutzt, dass es für das Betriebsverhalten von mehrphasigen elektrischen Maschinen maßgeblich ist, auf die verketteten Phasenspannungen abzustellen, weshalb diese Phasenspannungen um einen jeweiligen gleichen Spannungsbetrag verschoben werden dürfen, ohne die bestimmungsgemäße Funktion der elektrischen Maschine zu beeinträchtigen.

Auch wenn vorliegend für die Phasenwechselströme beziehungsweise die Phasenspannungen ein sinusförmiger Verlauf vorgesehen ist, ist die Erfindung jedoch hierauf nicht beschränkt. Die Phasenwechselströme beziehungsweise die Phasenspannungen können natürlich auch einen jeweiligen anderen harmonischen Verlauf aufweisen, der von einer jeweiligen spezifischen Anwendung abhängig sein kann.

Gemäß der Erfindung wird deshalb das Überlagerungsspannungssignal beim Ermitteln der Schaltsignale ergänzend berücksichtigt, wobei die Schaltsignale ergänzend abhängig von dem vorgegebenen Überlagerungsspannungssignal derart ermittelt werden, dass den jeweiligen Phasenspannungen eine vom Überlagerungsspannungssignal abhängige Überlagerungsspannung überlagert wird.

Vorzugsweise ist diese Überlagerungsspannung für sämtliche Phasenspannungen gleich groß, sodass insbesondere die Auswirkungen auf die mehrphasige elektrische Maschine weitgehend klein gehalten werden können. Das Überlagerungsspannungssignal kann dazu dienen, bei einer Schaltsignaleinheit der Steuereinheit, die aus vorgegebenen Werten für die Phasenspannungen beziehungsweise Phasenwechselströme jeweilige Schaltsignale für die Schaltelemente bereitstellt, deren Tastverhältnis so zu beeinflussen, dass an den jeweiligen Phasenanschlüssen des Mehrpegelenergiewandlers die jeweiligen Phasenspannungen überlagert mit der Überlagerungsspannung bereitgestellt werden. Dadurch kann die eingangs beschriebenen Problematik hinsichtlich der ungünstigen Belastung, insbesondere in Bezug auf einen Mittelpunktpfad bei einem Dreipunkt-Wechselrichter, reduziert werden, weil durch die Verschiebung der jeweiligen Phasenspannungen aufgrund der Überlagerungsspannung die Belastung zumindest teilweise auf die jeweiligen anderen Pfade verlagert wird.

Dadurch ist es möglich, insbesondere bei kleinen Amplituden von Phasenspannungen sowie auch bei kleinen Grundfrequenzen der Phasenspannungen die Belastung des Mittelpunktpfads zu reduzieren. Entsprechend werden die anderen Pfade stärker belastet, sodass insgesamt eine gleichmäßigere Beanspruchung der Schaltelemente in Bezug auf die thermische Beanspruchung erreicht wird. Das Prinzip ist dem Grunde nach unabhängig davon, wie viele elektrische Potentiale der Mehrpegelenergiewandler nutzt, um die gewünschte Energiewandlungsfunktion zu realisieren. Ebenso ist das Prinzip natürlich davon unabhängig, wie viele Phasen die mehrphasige elektrische Maschine aufweist. Grundsätzlich kann also mit der Erfindung eine Beanspruchung wenigstens eines einzelnen der Potentiale auf andere Potentiale zumindest teilweise verschoben werden.

Durch die Erfindung kann also erreicht werden, dass die Schaltelemente des Mehrpegelenergiewandlers insgesamt gleichmäßiger belastet werden, sodass neben einer größeren Beanspruchung des Mehrpegelenergiewandlers insgesamt auch eine Alterung der Schaltelemente insgesamt und damit auch des gesamten Mehrpegelenergiewandlers reduziert werden können. Dadurch kann die Belastbarkeit des Mehrpegelenergiewandlers insgesamt vergrößert und/oder aber seine Auslegung hinsichtlich konstruktiver Beanspruchungen reduziert werden. Die Zuverlässigkeit kann erhöht und/oder die Kosten können reduziert werden.

Die Phasenspannungen sind Wechselspannungen an den jeweiligen Phasenanschlüssen des Mehrpegelenergiewandlers beziehungsweise Wechselrichters beziehungsweise der elektrischen Maschine und betreffen dabei Wechselspannungen an den jeweiligen Phasenanschlüssen des Mehrpegelenergiewandlers beziehungsweise Wechselrichters, an denen die mehrphasige elektrische Maschine angeschlossen ist. Für jede der Phasen der mehrphasigen elektrischen Maschine ist hierbei vorzugsweise durch den Mehrpegelenergiewandler beziehungsweise den Wechselrichter wenigstens ein Phasenanschluss bereitgestellt, an den die jeweilige Phase der mehrphasigen elektrischen Maschine angeschlossen werden kann. Für jeden Phasenanschluss ist durch den Mehrpegelenergiewandler beziehungsweise den Wechselrichter jeweils wenigstens eine Schaltungsanordnung mit einer geeigneten Anzahl von Schaltelementen vorgesehen, mittels der der jeweilige Phasenanschluss selektiv mit wenigstens einem der elektrischen Potentiale des Mehrpegelenergiewandlers beziehungsweise des Wechselrichters elektrisch gekoppelt werden kann.

In der Regel werden durch geeignete Impulsmuster der durch die Steuereinheit bereitgestellten Schaltsignale, mit denen die jeweiligen Schaltelemente gesteuert werden, die jeweiligen Phasenströme in Bezug auf die mehrphasige elektrische Maschine eingestellt. Die zugeordneten Phasenspannungen können nun aus diesen Impulsmustern ermittelt werden, indem zum Beispiel das jeweilige Impulsmuster mittels eines geeigneten Tiefpasses gefiltert wird, eine Fourier-Transformierte ermittelt wird, die jeweilige Phasenspannung mittels eines Leistungsmessgeräts ermittelt wird und/oder dergleichen. Die Phasenspannung entspricht somit nicht dem unmittelbaren Impulsmuster, welches am jeweiligen Phasenanschluss des Mehrpegelenergiewandlers beziehungsweise des Wechselrichters unmittelbar bereitgestellt ist. Aus diesem Grund ist auch die Frequenz der Grundschwingung der jeweiligen Phasenspannungen in der Regel deutlich kleiner als die Taktrate der Schaltsignale, gemäß denen die jeweiligen Impulsmuster an den jeweiligen Phasenanschlüssen bereitgestellt werden.

Gemäß einer Weiterbildung wird vorgeschlagen, dass das Überlagern zumindest dann erfolgt, wenn eine Frequenz der Sollspannungssignale kleiner als eine vorgegebene Vergleichsfrequenz ist. Die vorgegebene Vergleichsfrequenz kann zum Beispiel eine Frequenz von etwa 30 Hz oder weniger sein. Dies kann berücksichtigen, dass thermische Zeitkonstanten der Schaltelemente relativ klein sind und ein entsprechender Temperaturhub bereits signifikant für das jeweilige Schaltelement sein kann. Oberhalb der Vergleichsfrequenz kann das Bereitstellen des Überlagerungsspannungssignals reduziert oder sogar abgestellt sein. Dadurch braucht das erfindungsgemäße Steuern beziehungsweise Betreiben der Schaltelemente nur dann vorgesehen zu werden, wenn sich dies aufgrund der Betriebseigenschaften des Mehrpegelenergiewandlers, insbesondere seiner Schaltelemente, im bestimmungsgemäßen Betrieb als zweckmäßig erweist. Da die Grundfrequenz der Sollspannungssignale in der Regel im Wesentlichen der Grundfrequenz der Phasenwechselströme entspricht, kann die Vergleichsfrequenz natürlich auch auf die Grundfrequenz der Phasenwechselströme bezogen sein.

Gemäß einer Weiterbildung wird vorgeschlagen, dass das Überlagern zumindest dann erfolgt, wenn eine Amplitude der Sollspannungssignale kleiner als eine vorgegebene Vergleichsamplitude ist. Dadurch kann vermieden werden, dass die elektrischen Potentiale beziehungsweise die mit diesen elektrisch gekoppelten Schaltelemente besonders belastet werden, die für die Realisierung der derartigen Phasenspannungen relevant sind. Dies sind vorzugsweise elektrische Potentiale beziehungsweise deren Schaltelemente, die in einem mittleren Bereich zwischen dem maximal positiven und dem maximal negativen elektrischen Potential sind. Bei einem Dreipunkt-Wechselrichter ist dies vorzugsweise das mittlere Potential beziehungsweise der Mittelpunktpfad. Durch das Überlagern der Überlagerungsspannung kann die Belastung somit auf andere elektrische Potentiale beziehungsweise die diesen zugeordneten Schaltelemente verteilt werden. Oberhalb der Vergleichsamplitude braucht das Steuern der Schaltelemente beziehungsweise das Betreiben der Schaltelemente gemäß der Erfindung also nicht realisiert zu sein. Natürlich kann diese Weiterbildung auch mit der vorhergehenden Weiterbildung in Bezug auf die Frequenz kombiniert sein.

Es kann vorgesehen sein, dass für jede der Phasen ein separates Überlagerungsspannungssignal bereitgestellt wird, mittels dem für jede der Phasen Amplituden der jeweiligen Überlagerungsspannungen individuell eingestellt werden. Dadurch ist es möglich, für jede der Phasen die jeweilige Überlagerungsspannung individuell einzustellen. Dies hat den Vorteil, dass dadurch Toleranzen, insbesondere in Bezug auf das Bereitstellen der Sollspannungssignale sowie auch in Bezug auf die elektrischen Eigenschaften der jeweiligen Phasen der mehrphasigen elektrischen Maschine, phasenspezifische Besonderheiten und/oder dergleichen besser berücksichtigt oder auch kompensiert werden können. Darüber hinaus können natürlich auch weitere Anwendungen vorgesehen sein, wobei unterschiedliche Phasen mit voneinander abweichenden Überlagerungsspannungen derart beaufschlagt werden, dass diese sich im bestimmungsgemäßen Betrieb der Antriebseinrichtung kompensieren können. Hierdurch können spezifische Effekte erreicht werden, die für etwaige spezifische Anwendungen relevant sein können. Vorzugsweise sind jedoch die Überlagerungsspannungssignale sowie die entsprechend zugeordneten Überlagerungsspannungen im Wesentlichen gleich groß.

Ferner wird vorgeschlagen, dass Temperaturen der Schaltelemente ermittelt werden und das Überlagerungsspannungssignal abhängig von den ermittelten Temperaturen eingestellt wird. Diese Weiterbildung hat den Vorteil, dass das Steuern der Schaltelemente spezifisch an eine jeweilige thermische Belastung der Schaltelemente angepasst werden kann. Dadurch kann auf einfache Weise eine mittlere gleichmäßige Beanspruchung der Schaltelemente, insbesondere in Bezug auf eine thermische Beanspruchung, erreicht werden. Die Überlagerungsspannung beziehungsweise das Überlagerungsspannungssignal braucht also nicht zwingend konstant zu sein, sondern kann bedarfsweise variiert werden. Das Überlagerungsspannungssignal kann ein Gleichspannungssignal sein, wobei die Amplitude der Gleichspannung bedarfsweise angepasst werden kann. Neben der Abhängigkeit von der Temperatur kann die Amplitude des Überlagerungsspannungssignals natürlich auch von einer Amplitude der Phasenspannung und/oder des Phasenwechselstroms sowie gegebenenfalls auch von einer Frequenz, insbesondere einer Grundschwingung, der Phasenspannung beziehungsweise des Phasenwechselstroms abhängig sein. Die Temperaturen der Schaltelemente können in bekannter Weise ermittelt werden, beispielsweise indem Schalteigenschaften der Schaltelemente erfasst werden oder dergleichen. Natürlich kann auch vorgesehen sein, dass die Schaltelemente jeweilige Temperatursensoren aufweisen, die an die Steuereinheit angeschlossen sind und deren Sensorsignale von dieser entsprechend ausgewertet werden. Auch Kombinationen hiervon können vorgesehen sein.

Weiterhin kann vorgesehen sein, dass Alterungszustände der Schaltelemente ermittelt werden und das Überlagerungsspannungssignal abhängig von den ermittelten Alterungszuständen eingestellt wird. Bei Halbleiterschaltelementen erweist sich insbesondere ein Anstieg der jeweiligen Temperatur im bestimmungsgemäßen Betrieb als Indikator für einen Alterungszustand. Dies kann für die Bereitstellung des Überlagerungsspannungssignals ergänzend berücksichtigt werden, so dass gegebenenfalls auch unterschiedliche Alterungszustände von Schaltelementen des Mehrpegelenergiewandlers für das Einstellen der Überlagerungswechselspannung herangezogen werden können.

Das Überlagerungsspannungssignal kann beispielsweise ein Gleichspannungssignal sein. Darüber hinaus kann es natürlich auch durch ein Wechselspannungssignal gebildet sein. Dadurch ist es möglich, die Belastung entsprechend des Wechselspannungssignals zyklisch auf die verfügbaren elektrischen Potentiale beziehungsweise deren Schaltelemente zu verteilen. Je nach Art der Wechselspannung beziehungsweise unter Berücksichtigung der Frequenz kann eine entsprechende Verteilung der thermischen Belastung erreicht werden. Die Belastbarkeit des Mehrpegelenergiewandlers beziehungsweise Wechselrichters, insbesondere seiner Schaltelemente, kann somit weiter verbessert werden.

Darüber hinaus wird vorgeschlagen, dass eine Amplitude und/oder eine Frequenz des Wechselspannungssignals abhängig von einer thermischen Zeitkonstante der Schaltelemente eingestellt wird. Hierdurch können besondere Eigenschaften der Schaltelemente sowie auch des Mehrpegelenergiewandlers beziehungsweise Wechselrichters insgesamt verbessert berücksichtigt werden. So kann die Frequenz der Wechselspannung beispielsweise so gewählt werden, dass ein Temperaturhub eines jeweiligen Schaltelements möglichst gering wird. Es können zum Beispiel auch thermische Zeitkonstanten der Schaltelemente berücksichtigt werden.

Die Wechselspannung kann eine sinusförmige Wechselspannung sein. Besonders vorteilhaft handelt es sich jedoch um eine trapezförmige Wechselspannung.

Natürlich können diese Ausgestaltungen auch miteinander kombiniert sein. Das Kombinieren kann umfassen, dass die Signalform bedarfsweise gewechselt wird, beispielsweise in einem vorgegebenen Zeitraster, abhängig von erfassten Temperaturen der Schaltelemente, und/oder dergleichen. Die Signalform der Wechselspannung kann veränderbar sein, beispielsweise abhängig von einer erfassten Beanspruchung der Schaltelemente, einem Betriebszustand des Mehrpegelenergiewandlers und/oder dergleichen. Vorzugsweise ist das Wechselspannungssignal ein trapezförmiges Wechselspannungssignal. Diese Ausgestaltung eignet sich insbesondere dann, wenn zum Beispiel bei einem Dreipunkt-Wechselrichter der Mittelpunktpfad hinsichtlich seiner Belastbarkeit schwächer belastbar als die weiteren Pfade konstruiert ist. Bei einem derartigen Wechselrichter kann daher der Betrieb gemäß dem Stand der Technik schnell zu einer großen Beanspruchung der entsprechend klein dimensionierten Schaltelemente des Mittelspannungspfads führen. Durch Wahl des trapezförmigen Wechselspannungssignals kann hier die ungünstige Belastung für den Mittelpunktpfad auf die weiteren Pfade besser verteilt werden. Insgesamt kann die Signalform des Wechselspannungssignals natürlich auch an die Konstruktion des Mehrpegelenergiewandlers beziehungsweise Wechselrichters angepasst gewählt sein, um unterschiedliche Auslegungen von Schaltelementen besser zu berücksichtigen. Dies kann natürlich auch eine jeweilige Kühlung der Schaltelemente umfassen.

Die für das erfindungsgemäße Verfahren angegeben Vorteile und Wirkungen gelten natürlich gleichermaßen auch für die erfindungsgemäße Steuereinheit, den erfindungsgemäßen Mehrpegelenergiewandler sowie die erfindungsgemäße Antriebseinrichtung und umgekehrt. Entsprechend können für Verfahrensmerkmale auch Vorrichtungsmerkmale und umgekehrt formuliert sein.

Weitere Merkmale, Vorteile und Wirkungen ergeben sich aus der folgenden Beschreibung von Ausführungsbeispielen anhand der Figuren. In den Figuren bezeichnen gleiche Bezugszeichen gleiche Merkmale und Funktionen.

Es zeigen:
- FIG 1: eine schematische Schaltbilddarstellung einer Antriebseinrichtung mit einer dreiphasigen Asynchronmaschine, die an einen Dreipunkt-Wechselrichter angeschlossen ist;
- FIG 2: eine schematische Schaltbilddarstellung des Dreipunkt-Wechselrichters gemäß FIG 1;
- FIG 3: eine schematische Diagrammdarstellung von Sollspannungssignalen für Phasenspannungen an Phasenanschlüssen des Wechselrichters gemäß FIG 2 bei einer kleinen Spannungsamplitude,
- FIG 4: eine zeitlich vergrößerte Ausschnittdarstellung des Bereichs IV in FIG 3,
- FIG 5: eine schematische Diagrammdarstellung von Ausgangsspannungen an Phasenanschlüssen des Wechselrichters gemäß FIG 2, die gemäß FIG 4 ermittelt worden sind,
- FIG 6: eine schematische Diagrammdarstellung wie FIG 4 für eine ausgewählte der Phasen, wobei die Auswirkung einer Überlagerungsspannung für ein Verschieben in Richtung zu einem Pluspotential dargestellt ist,
- FIG 7: eine schematische Darstellung wie FIG 5 für eine Ausgangsspannung am Phasenanschluss gemäß FIG 6,
- FIG 8: eine schematische Diagrammdarstellung wie FIG 6 für eine negative Ausgangsspannung am Phasenanschluss, wobei die Auswirkung einer Überlagerungsspannung für ein Verschieben in Richtung zu einem Minuspotential dargestellt ist,
- FIG 9: eine schematische Diagrammdarstellung wie FIG 7 für das Ermitteln der Ausgangsspannung gemäß FIG 8,
- FIG 10: eine schematische Diagrammdarstellung wie FIG 4, bei der die Phasenspannungen von einer Überlagerungsspannung für eine Verschiebung zum Pluspotential überlagert sind,
- FIG 11: eine schematische Diagrammdarstellung wie FIG 5 für die Schaltsignale für entsprechende Schaltsignale gemäß FIG 10,
- FIG 12: eine schematische Diagrammdarstellung wie FIG 10, wobei nunmehr die Überlagerungsspannung eine Verschiebung zum Minuspotential bewirkt,
- FIG 13: eine schematische Diagrammdarstellung wie FIG 11 für das Szenario gemäß FIG 12,
- FIG 14: eine weitere schematische Diagrammdarstellung wie FIG 10, bei der die Überlagerungsspannung kleiner ist als bei der Ausgestaltung gemäß FIG 10,
- FIG 15: eine schematische Diagrammdarstellung der Schaltsignale für das Szenario gemäß FIG 14,
- FIG 16: eine schematische Diagrammdarstellung für individuelle Überlagerungsspannungen für die Phasenspannungen gemäß einer ersten Ausgestaltung,
- FIG 17: eine schematische Diagrammdarstellung wie FIG 16 für eine zweite Ausgestaltung,
- FIG 18: eine schematische Diagrammdarstellung wie FIG 16 für eine dritte Ausgestaltung,
- FIG 19: eine schematische Diagrammdarstellung von durch die Überlagerungsspannungen überlagerten Phasenspannungen,
- FIG 20: eine schematische Diagrammdarstellung von Überlagerungsspannungssignalen gemäß FIG 19, und
- FIG 21: eine schematische Diagrammdarstellung, bei der mittels Graphen für unterschiedliche Frequenzen der Grundschwingung der Phasenspannungen eine Strombelastbarkeit der Schaltelemente dargestellt ist.

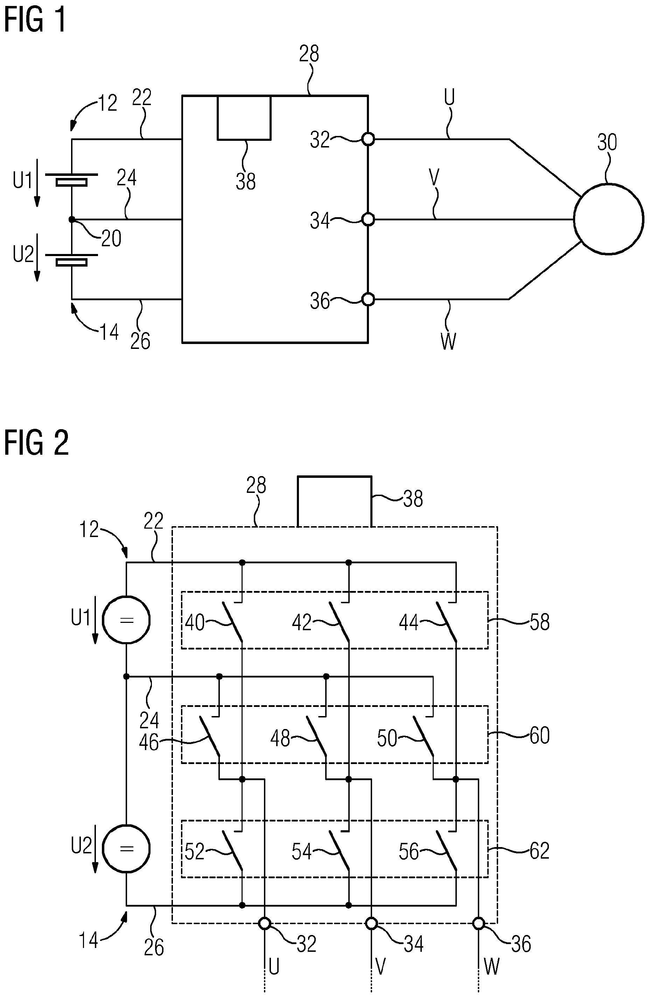

FIG 1 zeigt in einer schematischen Schaltbilddarstellung eine Antriebseinrichtung 10 gemäß der Erfindung, die eine dreiphasige Asynchronmaschine 30 umfasst, die jeweilige Phasen U, V, W aufweist. Ferner umfasst die Antriebseinrichtung 10 einen an die dreiphasige Asynchronmaschine 30 angeschlossenen Dreipunkt-Wechselrichter 28 als Mehrpegelenergiewandler, der drei elektrische Potentiale 22, 24, 26 nutzt. Der Dreipunkt-Wechselrichter 28 weist Phasenanschlüsse 32, 34, 36 auf, an die die Phasen U, V, W der Asynchronmaschine 30 angeschlossen sind.

Der Dreipunkt-Wechselrichter 28 ist ferner an einen ersten Gleichspannungszwischenkreis 12 und einen zweiten Gleichspannungszwischenkreis 14 angeschlossen, die an einem Anschlusspunkt 20 elektrisch miteinander gekoppelt sind. Dadurch werden die elektrischen Potentiale 22, 24, 26 für den Dreipunkt-Wechselrichter 28 bereitgestellt. Die Gleichspannungszwischenkreise 12, 14 stellen jeweilige Zwischenkreisgleichspannungen U1, U2 bereit, die vorliegend etwa gleich groß sind. Je nach Bedarf können sie aber auch voneinander abweichen.

Im bestimmungsgemäßen Betrieb werden die Gleichspannungszwischenkreise 12, 14 mittels des Wechselrichters 28 mit der Asynchronmaschine 30 entsprechend energietechnisch gekoppelt. Vorliegend ist vorgesehen, dass ein bidirektionaler Energieaustausch ermöglicht ist, so dass die Asynchronmaschine 30 im Vierquadrantenbetrieb betrieben werden kann. Die Asynchronmaschine 30 kann somit sowohl als elektrischer Motor als auch als elektrischer Generator betrieben werden. Mit dem Wechselrichter 28 wird die entsprechende energietechnische Kopplung zu den Gleichspannungszwischenkreisen 12 und 14 hergestellt. Für seinen bestimmungsgemäßen Betrieb umfasst der Dreipunkt-Wechselrichter 28 eine Steuereinheit 38, die mit einer nicht dargestellten übergeordneten Steuerung der Antriebseinrichtung 10 kommunikationstechnisch gekoppelt ist. Die Steuereinheit 38 kann in anderen Ausgestaltungen jedoch auch zumindest teilweise einstückig mit der übergeordneten Steuerung der Antriebseinrichtung 10 ausgebildet sein.

FIG 2 zeigt in einer weiteren schematischen Schaltbilddarstellung einen prinzipiellen Aufbau des Dreipunkt-Wechselrichters 28. Der Dreipunkt-Wechselrichter 28 umfasst drei Schaltungsanordnungen 58, 60, 62, die jeweilige Schaltelemente 40 bis 56 umfassen. So umfasst die Schaltungsanordnung 58 die Schaltelemente 40, 42, 44. Die Schaltungsanordnung 60 umfasst die Schaltelemente 46, 48, 50. Die Schaltungsanordnung 62 umfasst die Schaltelemente 52, 54, 56. Die Schaltelemente 40, 42, 44 der Schaltungsanordnung 58 sind jeweils mit einem ihrer Anschlüsse an das elektrische Potential 22 angeschlossen. Entsprechend sind die Schaltelemente 46, 48, 50 der Schaltungsanordnung 60 mit jeweils einem ihrer Anschlüsse an das elektrische Potential 24 angeschlossen. Schließlich sind die Schaltelemente 52, 54, 56 jeweils mit einem ihrer Anschlüsse an das elektrische Potential 26 angeschlossen. Die Schaltelemente sind vorliegend durch IGBT gebildet.

Die zweiten Anschlüsse der Schaltelemente 40, 46, 52 sind jeweils am Phasenanschluss 32, die zweiten Anschlüsse der Schaltelemente 42, 48, 54 sind jeweils am Phasenanschluss 34 und die zweiten Anschlüsse der Schaltelemente 44, 50, 56 sind jeweils am Phasenanschluss 36 angeschlossen.

Durch die vorgenannte Schaltungstopologie kann jeder der Phasenanschlüsse 32, 34, 36 je nach Schaltzustand der jeweiligen Schaltelemente 40 bis 56 mit einem jeweiligen der elektrischen Potentiale 22, 24, 26 elektrisch gekoppelt werden. Die mit einem jeweiligen der Phasenanschlüsse 32, 34, 36 elektrisch gekoppelten Schaltelemente 40 bis 56 sind in der Regel gegeneinander elektronisch verriegelt, so dass sie nicht gleichzeitig den eingeschalteten Schaltzustand einnehmen können. Dadurch können Kurzschlüsse zwischen den elektrischen Potentialen 22, 24, 26 vermieden werden.

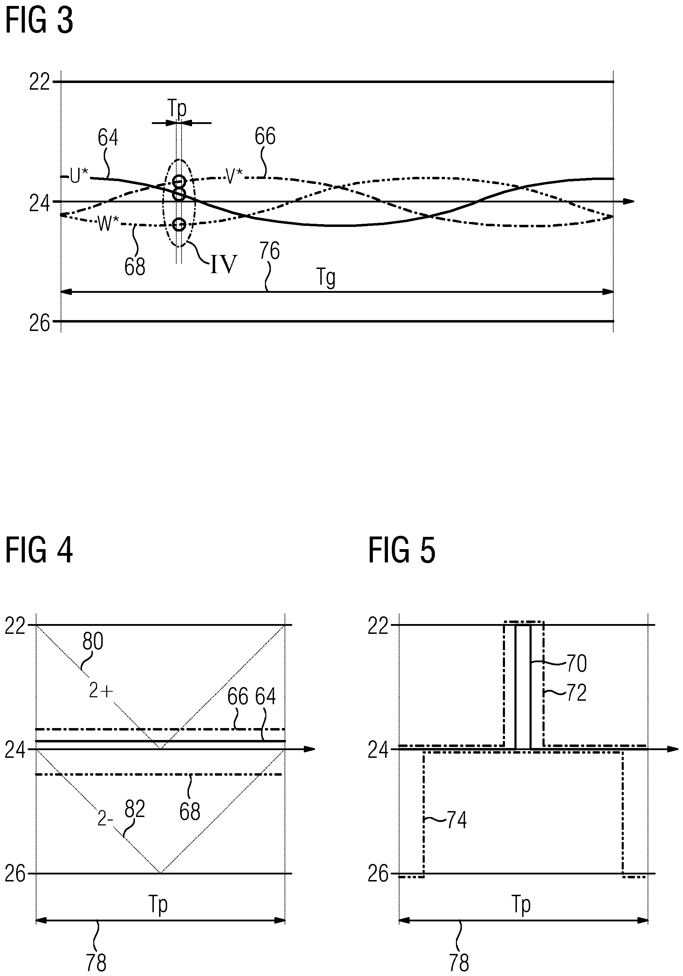

Der Dreipunkt-Wechselrichter 28 umfasst ferner die Steuereinheit 38, die zum Steuern der Schaltelemente 40 bis 56 in einem vorgegebenen Taktbetrieb dient, zu welchem Zweck sie jeweilige Schaltsignale erzeugt, um Ausgangsspannungen 70, 72, 74 an den jeweiligen Phasenanschlüssen 32, 34, 36 (FIG 5) bereitzustellen. Die Schaltsignale werden vorliegend gemäß einer Pulsweitenmodulation erzeugt, wie im Folgenden noch weiter erläutert werden wird.

FIG 3 zeigt in einer schematischen Diagrammdarstellung Sollspannungssignale 64, 66, 68, die für die Pulsweitenmodulation zum Erzeugen von jeweiligen Phasenspannungen 70, 72, 74 an den jeweiligen Phasenanschlüssen 32, 34, 36 zur Verfügung stehen. Eine Ordinate ist dem elektrischen Potential zugeordnet, wohingegen eine Abszisse der Zeit zugeordnet ist. Im Diagramm gemäß FIG 3 ist mittels eines Graphen 76 eine Periode der Grundschwingung der Sollspannungssignale 64, 66, 68 dargestellt. Die Sollspannungssignale64, 66, 68 sind jeweils phasenverschoben zueinander, und zwar vorliegend um etwa 120°.

Aus FIG 3 ist ersichtlich, dass eine Spannungsamplitude der Sollspannungssignale 64, 66, 68 vergleichsweise klein ist, weshalb ein Mittelpunktpfad des Dreipunkt-Wechselrichters 28, der durch die Schaltungsanordnung 60 gebildet ist, besonders stark beansprucht wird. Dieser Betriebszustand tritt bei der vorliegenden Antriebseinrichtung 10 dann auf, wenn die Asynchronmaschine 30 bei kleiner Drehzahl betrieben wird. Üblicherweise ist die Spannungsamplitude einer jeweiligen der Sollspannungssignale 64, 66, 68 etwa proportional zur Frequenz der Grundschwingung. Dies wirkt sich auf den Wechselrichter 28 aus, indem die entsprechende Schaltungsanordnung 60 und hier insbesondere deren Schaltelemente 46, 48, 50, bei kleiner Grundschwingungsspannung thermisch besonders beansprucht werden.

FIG 4 zeigt eine zeitlich vergrößerte Darstellung eines Bereichs IV in FIG 3. Mit den Bezugszeichen 64, 66, 68 sind entsprechende Sollspannungssignale für die Phasenspannungen 70, 72, 74 (FIG 5) dargestellt, wie sie durch die Steuereinheit 38 verarbeitet werden. Um die Schaltsignale für die Phasenspannungen 70, 72, 74 gemäß der Pulsweitenmodulation zu erzeugen, werden die Sollspannungssignale 64, 66, 68 jeweiligen nicht dargestellten Vergleichern der Steuereinheit 38 zugeführt, die diese Signale mit entsprechenden Dreiecksignalen vergleichen, die in FIG 4 mit den Graphen 80, 82 dargestellt sind. Der Graph 80 zeigt ein Dreiecksignal für Sollspannungssignale 64, 66, deren Potentiale zwischen den elektrischen Potentialen 22, 24 sind. Der Graph 82 zeigt ein Dreiecksignal, welches dazu dient, Sollspannungssignale wie das Sollspannungssignal 68 gemäß FIG 4 zu vergleichen, welches zwischen den Potentialen 24, 26 ist.

Durch die Vergleichsoperation ergeben sich entsprechende Schaltsignale für die Phasenspannungen 70, 72, 74, wie sie in FIG 5 dargestellt sind. Diese Schaltsignale führen zu entsprechenden Phasenspannungen an den Phasenanschlüssen 32, 34, 36. In den FIG 4 und 5 ist jeweils mit einem Graphen 78 eine einzelne Taktperiode der Taktrate der Schaltsignale dargestellt. Die Ordinate ist hier wieder den elektrischen Potentialen zugeordnet, wohingegen die Abszisse der Zeit zugeordnet ist.

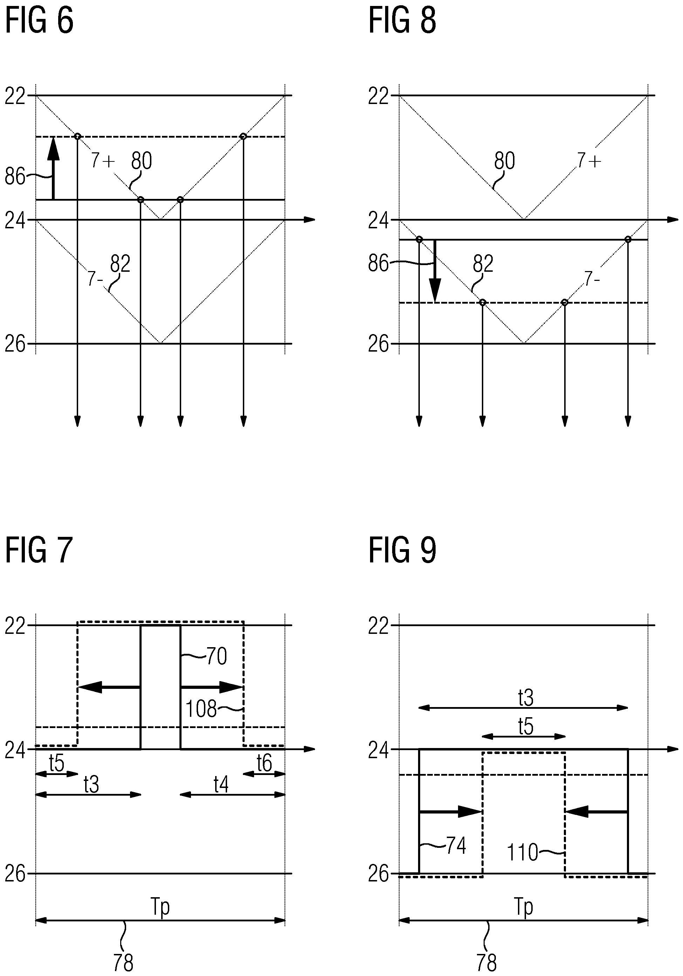

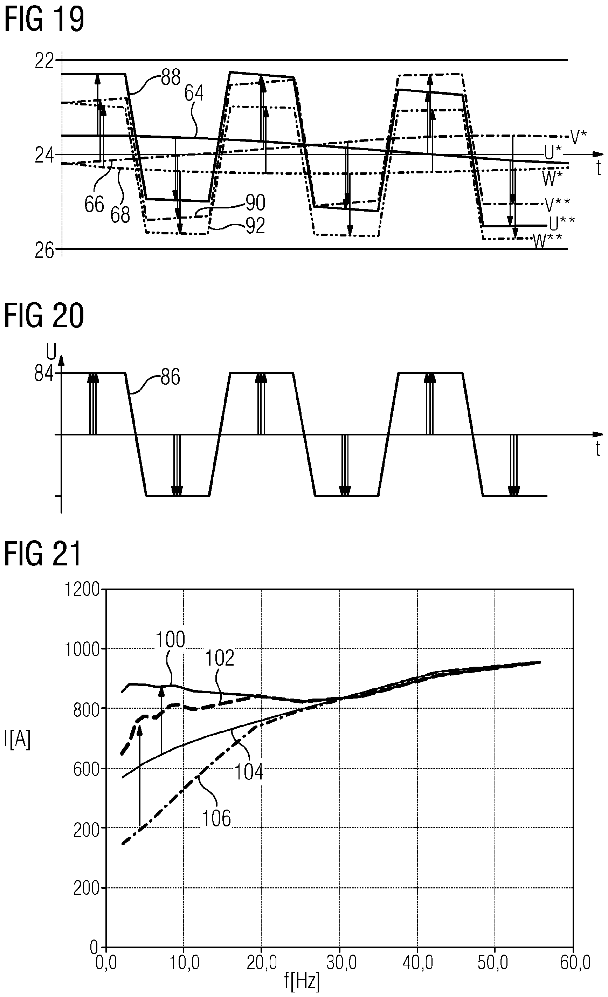

FIG 6 zeigt in einer schematischen Diagrammdarstellung wie FIG 4 den Sachverhalt für eine einzelne der Phasen, vorliegend für die Phase U, wenn auf die Vergleichsfunktion bei der Schaltsignalgenerierung eine Überlagerungsspannung mittels eines Überlagerungsspannungssignals 86 (FIG 20) überlagert wird. Wie aus FIG 6 ersichtlich ist, ergeben sich die Schaltzeitpunkte des Schaltsignals für die Phasenspannung 70 unter Berücksichtigung der Zeiträume t3, t4, wie es anhand von FIG 7 dargestellt ist, die eine entsprechende Darstellung gemäß FIG 5 zeigt. Durch Einwirken der Überlagerungsspannung aufgrund des Überlagerungsspannungssignals 86 verschieben sich die Zeiträume, so dass die Schaltzeitpunkte nun anhand der Zeiträume t5, t6 bestimmt sind, wie dies mittels des Schaltsignals für die Phasenspannung 108 dargestellt ist. Dadurch verschiebt sich das mittlere elektrische Potential am entsprechenden Phasenanschluss 32.

Die FIG 8 und 9 zeigen entsprechend den FIG 6 und 7 die Verhältnisse für den Fall, dass das Sollspannungssignal ein aktuelles momentanes Potential zwischen den elektrischen Potentialen 24 und 26 hat. Das Überlagerungsspannungssignal 86 führt hier zu einer negativen Überlagerungsspannung. Entsprechend verschieben sich die Zeiträume gemäß FIG 9. In den FIG 8 und 9 ist dies für die Phase W dargestellt. Entsprechend zeigt FIG 9 die Phasenspannung 74 ohne Einwirken des Überlagerungsspannungssignals 86, wohingegen FIG 9 den Sachverhalt für die Phasenspannung 110 unter Einwirken des Überlagerungsspannungssignals 86 zeigt.

Da das Überlagerungsspannungssignal 86 für die Phasen U, V, W vorliegend gleich ist (FIG 20), wirkt sich dies dahingehend aus, dass an den Phasenanschlüssen 32, 34, 36 die Sollspannungssignale64, 66, 68 um jeweils einen gleichen Betrag verschoben sind. Für die Asynchronmaschine 30 ist dies ohne Auswirkung, da für den Betrieb der Asynchronmaschine 30 lediglich die verketteten Spannungen relevant sind.

Dagegen wirkt sich die Überlagerungsspannung dahingehend aus, dass der Mittelpunktpfad des Dreipunkt-Wechselrichters 28 weniger belastet wird. Es werden somit nicht nur die Schaltelemente der Schaltungsanordnung 60 weniger stark belastet, sondern die Belastung kann hierdurch auf die Schaltelemente der anderen Schaltungsanordnungen 58, 62 verteilt werden. Dadurch können die Schaltelemente 40 bis 56 insgesamt gleichmäßiger belastet werden, wodurch die Zuverlässigkeit erhöht und die Alterung reduziert werden können. Darüber hinaus kann die Belastbarkeit des Dreipunkt-Wechselrichters 28 insgesamt vergrößert werden.

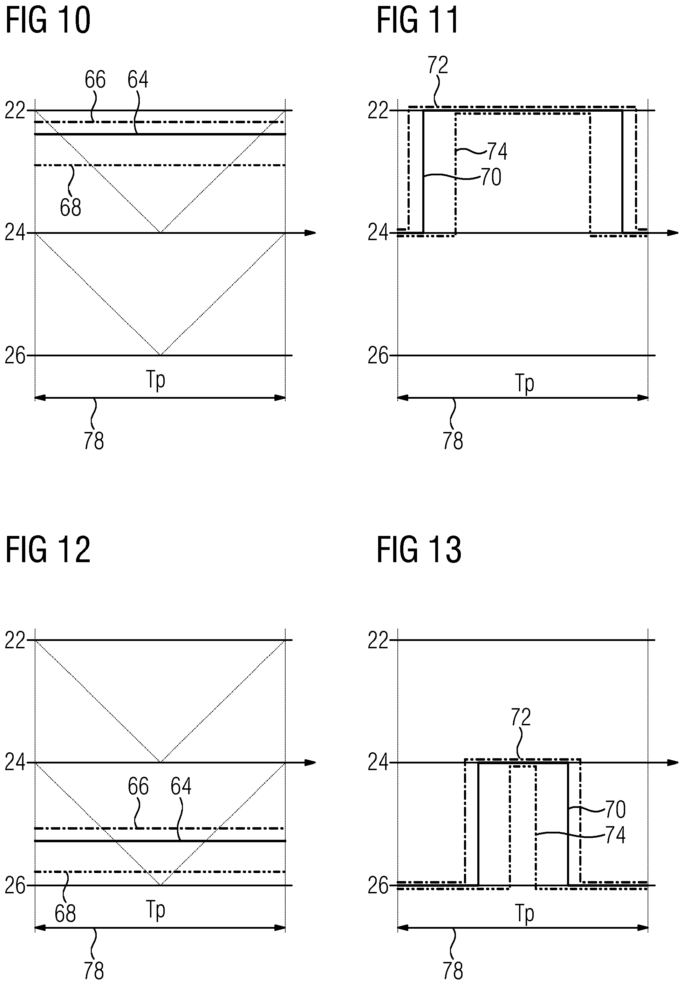

Die FIG 10 und 11 zeigen in schematischen Diagrammdarstellungen wie die FIG 4 und 5 die Verhältnisse, wenn eine große Überlagerungsspannung den jeweiligen Sollspannungssignalen 64, 66, 68 überlagert wird. Die entsprechenden Phasenspannungen 70, 72, 74 zeigt FIG 11. Die FIG 12 und 13 zeigen eine entsprechende Situation, bei der die Überlagerungsspannung negativ ist, das heißt, die elektrischen Potentiale der Sollspannungssignale64, 66, 68 sind zwischen den elektrischen Potentialen 24, 26. Die entsprechenden Phasenspannungen 70, 72, 74 sind in FIG 13 dargestellt.

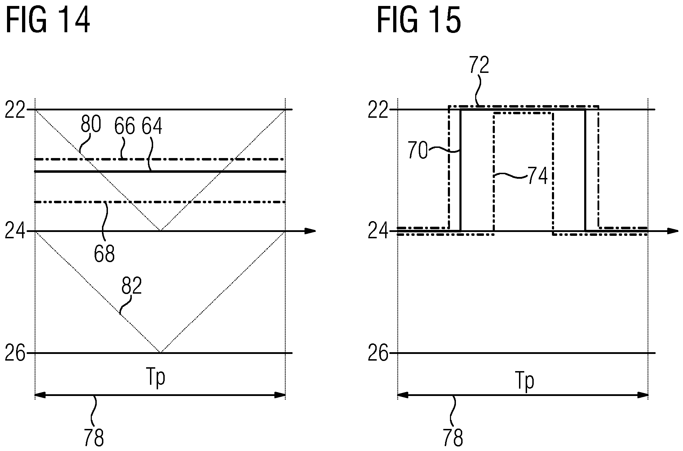

Mit den FIG 14 und 15 wird ein Zwischenwert der Überlagerungsspannung dargestellt, woraus ersichtlich ist, dass die Überlagerungsspannung sich auch kontinuierlich ändern kann, wodurch dann die Belastung der Schaltelemente 40 bis 56 ebenso, vorzugsweise kontinuierlich, verändert werden kann. Die FIG 14 und 15 stellen also einen Zwischenwert dar, wie er zu den Szenarien gemäß den FIG 10 bis 13 bereits erläutert wurde.

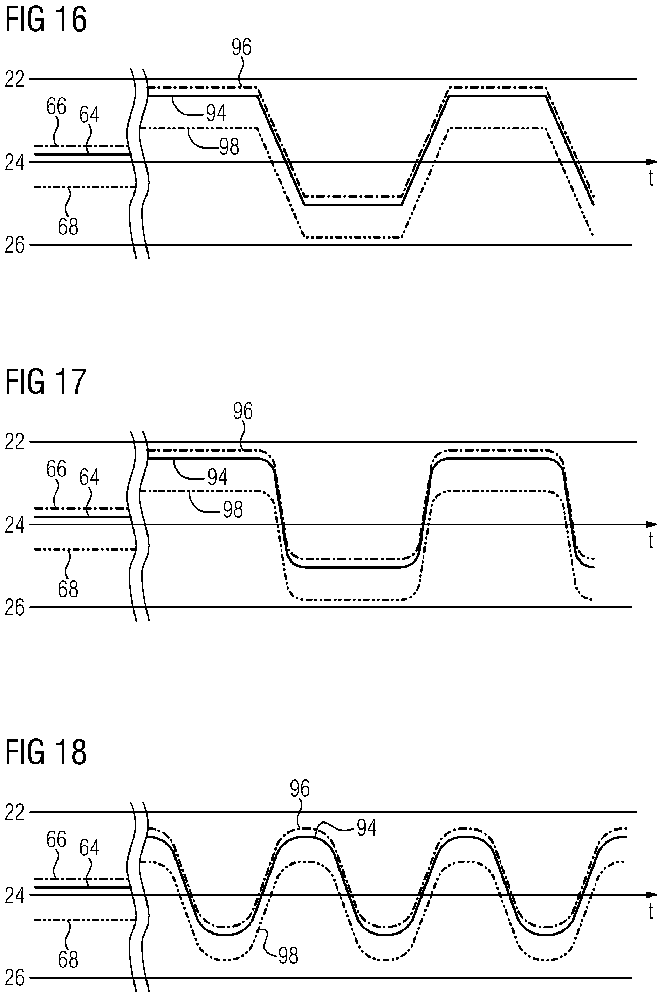

FIG 16 zeigt die durch ein Überlagerungsspanungssignal 86, welches trapezförmig ist, überlagerten Sollspannungssignale64, 66, 68 mittels entsprechender Graphen 94, 96, 98, wie sie sich aufgrund der Überlagerungsspannungen zeitlich verändern können. Vorliegend sind die Überlagerungsspannungen durch trapezförmige Wechselspannungen gebildet, deren Frequenz größer ist als die Frequenz der Phasenspannungen 64, 66, 68. Das Überlagerungswechselspannungssignal 86 ist hier also beispielsweise trapezförmig.

FIG 17 zeigt eine entsprechende schematische Diagrammdarstellung wie FIG 16, bei der das Überlagerungsspannungssignal 86 eine etwa rechteckförmige Signalform aufweist, wobei die Ecken gerundet sind.

FIG 18 zeigt in einer weiteren Ausgestaltung die Überlagerungsspannung aufgrund eines Überlagerungsspannungssignals 86, welches eine etwa sinusförmige Signalform aufweist.

Die Frequenz der Überlagerungswechselspannungssignale braucht nicht konstant zu sein. Sie kann natürlich je nach Bedarf variiert werden, beispielsweise auch von einer Konstruktion des Dreipunkt-Wechselrichters 28, einem momentanen Belastungszustand und/oder dergleichen abhängig sein.

In den Diagrammen gemäß der FIG 16 bis 18 ist die Abszisse jeweils der Zeit zugeordnet, wohingegen die Ordinate dem elektrischen Potential zugeordnet ist.

FIG 19 zeigt in einem weiteren schematischen Diagramm die zeitlichen Verläufe der Sollspannungssignale 64, 68, 66 sowie die durch die Überlagerungsspannung überlagerten Verläufe der jeweiligen Sollspannungssignale mit entsprechend zugeordneten Graphen 88, 90, 92, wie sie gemäß FIG 16 dargestellt ist. Zu erkennen ist, dass sämtliche der Sollspannungssignale 64, 66, 68 entsprechend dem Überlagerungsspannungssignal 86 potentialverschoben werden, sodass die entsprechenden Schaltungsanordnungen 58, 60, 62 gleichmäßiger belastet werden.

FIG 20 zeigt in einem Spannungs-Zeit-Diagramm das entsprechende Überlagerungsspannungssignal 86, welches eine Amplitude 84 aufweist.

Mit der Erfindung können die folgenden Vorteile erreicht werden:
- Bei einer kleinen Frequenz der Grundschwingung der Sollspannungssignale kann der zulässige Strom der Schaltelemente vergrößert werden,
- bei elektrischen Maschinen steht das maximale Drehmoment bereits bei einer kleinen Drehzahl zur Verfügung,
- ein Rippelstrom und damit eine Erwärmung und eine Geräuschentwicklung der elektrischen Maschinen kann reduziert werden,
- Gleichtaktströme und dadurch verursachte Störungen im Bereich der elektromagnetischen Verträglichkeit können bei gleichen parasitären Kapazitäten reduziert werden.

Durch das Schaltelement, bei welchem sich die größte Temperatur einstellt, ist in der Regel die Strombelastbarkeit des gesamten Wechselrichters beziehungsweise Mehrpegelenergiewandlers begrenzt. Bei Verschiebung aller Phasenspannungen um den gleichen Betrag bleiben die verketteten Spannungen gleich, sodass Auswirkungen auf die elektrische Maschine vernachlässigbar sind.

Zugleich kann aber die Verteilung der Durchlassverluste auf die verschiedenen Schaltelemente des Mehrpegelenergiewandlers beeinflusst werden. Durch Verlagerung der Verluste weg von dem maximal beanspruchten Schaltelement zu anderen Schaltelementen kann bei gleichem Strom dessen Temperatur reduziert werden. Die maximal zulässige Temperatur dieses Schaltelements wird daher erst bei einem größeren Strom erreicht.

Vorteilhaft ist insbesondere, dass sich die Verschiebung der Sollspannungssignale stetig ausführen lässt und diese eine ebenfalls stetige Änderung der Verteilung der Verluste zur Folge haben kann. Dadurch lassen sich trotz möglicher Unterschiede der Durchlass- und Kühlungseigenschaften der Schaltelemente deren Verluste beziehungsweise deren Maximaltemperatur angleichen. Der Rippelstrom kann reduziert werden, weil keine Taktungslücken benötigt werden. Die für den Rippelstrom maßgebliche Frequenz bleibt beispielsweise über die gesamte Periode der Grundschwingung die doppelte Impulsfrequenz.

Gleichtaktströme sind in der Regel proportional zu einer Kapazität im Gleichtaktstromkreis und zur Änderungsgeschwindigkeit einer Gleichtaktspannung. Diese kann bei Nutzung der Taktungslücke sehr groß sein, weil sie in der Regel der Schaltgeschwindigkeit der Schaltelemente entspricht und diese zur Erzielung kleiner Schaltverluste möglichst schnell schalten sollen. Bei dem hier beschriebenen Verfahren gemäß der Erfindung ist dagegen die Änderungsgeschwindigkeit der Gleichtaktspannung entkoppelt vom Schaltverhalten der Schaltelemente und frei einstellbar.

Aufgrund der frei wählbaren Aufteilung der Verluste auf die Schaltelemente kann eine kleinere Temperatur der Schaltelemente insgesamt und eine gleichmäßigere Belastung der Schaltelemente erreicht werden. Die geringere thermische Beanspruchung einzelner Schaltelemente kann zu einer höheren Zuverlässigkeit bei gleichbleibendem Strom führen. Umgekehrt kann bei gleicher zulässiger Maximaltemperatur ein größerer Strom erreicht werden, sodass eine Leistungssteigerung möglich ist.

Der erste Gleichspannungszwischenkreis 12 stellt die erste Zwischenkreisgleichspannung U1 und der zweite Gleichspannungszwischenkreis 14 stellt die zweite Zwischenkreisgleichspannung U1 bereit. Vorliegend sind die erste und die zweite Zwischenkreisgleichspannung U1, U2 gleich groß. Je nach Anwendung kann aber auch vorgesehen sein, dass die erste und die zweite Zwischenkreisgleichspannung voneinander abweichen.

FIG 21 zeigt in einer schematischen Diagrammdarstellung die Auswirkungen, die mit dem erfindungsgemäßen Betriebsverfahren erreicht werden können. Die Abszisse ist der Frequenz zugeordnet, wohingegen die Ordinate dem elektrischen Strom zugeordnet ist.

Mit den in FIG 21 dargestellten Graphen 100, 102, 104, 106 sind maximale Strombelastbarkeiten der Schaltelemente 40 bis 56 und damit auch des Mehrpegelenergiewandlers beziehungsweise des Dreipunkt-Wechselrichters 28 dargestellt.

Ein Graph 104 zeigt ein Derating für den bestimmungsgemäßen Betriebsfall, ohne dass eine Überlagerungsspannung genutzt wird, wobei ein Temperaturrippel außer Betracht bleibt. Anhand des Graphen 104 ist ersichtlich, dass mit abnehmender Frequenz auch die zulässige Strombelastbarkeit abnimmt. Mit dem Graphen 106 ist der Sachverhalt für den Fall der maximal zulässigen Sperrschichttemperatur eines jeweiligen der Schaltelemente 40 bis 56 in Verbindung mit einem für die vorgegebene Lebensdauer zulässigen Temperaturrippel dargestellt. Der Temperaturrippel bezieht sich auf einen Temperaturhub während einer Periode der Grundschwingung der Sollspannungssignale 64, 66, 68. Je länger Überlastzeiten sind, desto stärker ist ein Derating vorzusehen. Dies kann anhand der Graphen 104 und 106 gezeigt werden.

Die Graphen 100 und 102 zeigen nun den Sachverhalt entsprechend unter Nutzung einer Überlagerungsspannung. Dabei ist hinsichtlich der Betriebsbedingungen der Graph 100 dem Graphen 104 und der Graph 102 dem Graphen 106 zugeordnet. Zu erkennen ist, dass durch die Nutzung der Überlagerungsspannung die Belastbarkeit des Mehrpegelenergiewandlers beziehungsweise Dreipunkt-Wechselrichters 28 deutlich erhöht werden kann, und zwar insbesondere im Bereich von Frequenzen, die kleiner als etwa 30 Hz sind. Je nach Konstruktion des Mehrpegelenergiewandlers beziehungsweise des Dreipunkt-Wechselrichters 28 kann dies jedoch auch variieren, weil die Wirkung der Erfindung unter anderem auch davon abhängig sein kann, wie die Konstruktion des Mehrpegelenergiewandlers beziehungsweise des Dreipunkt-Wechselrichters 28 real ausgeführt ist.

Die Ausführungsbeispiele dienen ausschließlich der Erläuterung der Erfindung und sollen diese nicht beschränken.

## Patentansprüche

1. Verfahren zum Betreiben von Schaltelementen (40 bis 56) eines wenigstens drei elektrische Potentiale (22,24,26) nutzenden Mehrpegelenergiewandlers (28), an den eine mehrphasige elektrische Maschine (30) angeschlossen ist, wobei Schaltelemente (40 bis 56) des Mehrpegelenergiewandlers (28) mittels entsprechender Schaltsignale (70,72,74) in einem vorgegebenen Taktbetrieb betrieben werden, wobei die Schaltsignale (70, 72,74) für die einer jeweiligen der Phasen (U,V,W) zugeordneten Schaltelemente (40 bis 56) abhängig von einem jeweiligen Sollspannungssignal (64,66,68) ermittelt werden, um jede Phase der mehrphasigen elektrischen Maschine (30) mit einer jeweiligen Phasenspannung (70,72,74) zu beaufschlagen, wobei die Schaltsignale ergänzend abhängig von einem vorgegebenen Überlagerungsspannungssignal (86) derart ermittelt werden, dass den jeweiligen Phasenspannungen (70,72,74) eine vom Überlagerungsspannungssignal (86) abhängige Überlagerungsspannung überlagert wird, wobei als Überlagerungsspannungssignal (86) ein Wechselspannungssignal genutzt wird, wobei das Wechselspannungssignal derart gebildet wird, dass die Belastung sich zyklisch auf die elektrischen Potentiale (22,24,26) und deren Schaltelemente (40 bis 56) verteilt, wobei durch Verschiebung der jeweiligen Phasenspannungen (70,72,74) aufgrund der Überlagerungsspannung eine Belastung der Schaltelemente (40 bis 56) gleichmäßiger auf sämtliche Schaltelemente (40 bis 56) des Mehrpegelenergiewandlers (28) verteilt wird, wobei das Wechselspannungssignal ein sinusförmiges oder trapezförmiges Wechselspannungssignal ist.

2. Verfahren nach Anspruch 1, **dadurchgekenn-**z e i c h n e t , dass das Überlagern dann erfolgt, wenn eine Frequenz der Sollspannungssignale (64,66,68) kleiner als eine vorgegebene Vergleichsfrequenz ist.

3. Verfahren nach einem der vorhergehenden Ansprüche, **dadurch gekennzeichnet , dass** das Überlagern dann erfolgt, wenn eine Amplitude der Sollspannungssignale (64,66,68) kleiner als eine vorgegebene Vergleichsamplitude ist.

4. Verfahren nach einem der vorhergehenden Ansprüche, **da** - **durch gekennzeichnet** , dass Temperaturen der Schaltelemente (40 bis 56) ermittelt werden und das Überlagerungsspannungssignal (86) abhängig von den ermittelten Temperaturen eingestellt wird.

5. Verfahren nach einem der vorhergehenden Ansprüche, **da** - **durch gekennzeichnet** , dass Alterungszustände der Schaltelemente (40 bis 56) ermittelt werden und das Überlagerungsspannungssignal (86) abhängig von den ermittelten Alterungszuständen eingestellt wird.

6. Verfahren nach einem der vorhergehenden Ansprüche,
**dadurch gekennzeichnet , dass** eine Amplitude und/oder eine Frequenz des Wechselspannungssignals abhängig von einer thermischen Zeitkonstante der Schaltelemente (40 bis 56) eingestellt wird.

7. Verfahren nach einem der vorhergehenden Ansprüche,
**dadurch gekennzeichnet , dass** das Wechselspannungssignal ein trapezförmiges Wechselspannungssignal ist.

8. Steuereinheit (38) zum Steuern von Schaltelementen (40 bis 56) eines wenigstens drei elektrische Potentiale (22,24,26) nutzenden Mehrpegelenergiewandlers (28), der zum Anschließen an eine mehrphasige elektrische Maschine (30) ausgebildet ist, wobei die Steuereinheit (38) ausgebildet ist, die Schaltelemente (40 bis 56) des Mehrpegelenergiewandlers (28) mittels entsprechender Schaltsignale (70,72,74) in einem vorgegebenen Taktbetrieb zu betreiben, zu welchem Zweck die Steuereinheit (38) die Schaltsignale (70,72,74) für die einer jeweiligen der Phasen zugeordneten Schaltelemente (40 bis 56) abhängig von einem jeweiligen Sollspannungssignal (64,66,68) ermittelt, um jede Phase (U,V,W) der mehrphasigen elektrischen Maschine (30) mit einer jeweiligen Phasenspannung (70,72,74) zu beaufschlagen, wobei die Steuereinheit (38) ferner ausgebildet ist, die Schaltsignale (70,72,74) ergänzend abhängig von einem vorgegebenen Überlagerungsspannungssignal (86) zu ermitteln, um den jeweiligen Phasenspannungen (64,66,68) eine vom Überlagerungsspannungssignal (86) abhängige Überlagerungsspannung zu überlagern, **dadurch gekennzeichnet , dass** die Steuereinheit (38) zur Durchführung eines Verfahrens nach einem der Ansprüche 1 bis 7 ausgebildet ist.

9. Mehrpegelenergiewandler (28), der zum Anschließen an eine mehrphasige elektrische Maschine (30) ausgebildet ist und der wenigstens drei elektrische Potentiale (22,24,26) nutzt, mit:
- Schaltelementen (40 bis 56) zum Beaufschlagen von jeder Phase (U,V,W) der mehrphasigen elektrischen Maschine (30) mit einer jeweiligen Phasenspannung (70,72,74), und
- einer Steuereinheit (38) zum Steuern der Schaltelemente (40 bis 56) in einem vorgegebenen Taktbetrieb mittels entsprechender Schaltsignale,
**dadurch gekennzeichnet, dass** die Steuereinheit (38) gemäß Anspruch 8 ausgebildet ist.

10. Antriebseinrichtung (10) mit:
- einer mehrphasigen elektrischen Maschine (30), und
- einem an die mehrphasige elektrische Maschine (30) angeschlossenen Mehrpegelenergiewandler (28), der wenigstens drei elektrische Potentiale (22,24,26) nutzt,
**dadurch gekennzeichnet , dass** der Mehrpegelenergiewandler (28) gemäß Anspruch 9 ausgebildet ist.

## Claims

1. Method for operating switching elements (40 to 56) of a multilevel energy converter (28) using at least three electric potentials (22, 24, 26), to which a multiphase electrical machine (30) is connected, wherein switching elements (40 to 56) of the multilevel energy converter (28) are operated in a predefined clock mode by means of corresponding switching signals (70, 72, 74), wherein the switching signals (70, 72, 74) for the switching elements (40 to 56) that are assigned to a respective one of the phases (U, V, W) are determined as a function of a respective desired voltage signal (64, 66, 68), in order to apply a respective phase voltage (70, 72, 74) to each phase of the multiphase electrical machine (30), wherein the switching signals are determined in addition as a function of a predefined overlaying voltage signal (86) in such a way that the respective phase voltages (70, 72, 74) are overlaid with an overlaying voltage dependent on the overlaying voltage signal (86), wherein an AC voltage signal is used as the overlaying voltage signal (86), wherein the AC voltage signal is formed in such a way that the stress is distributed cyclically to the electrical potentials (22, 24, 26) and to their switching elements (40 to 56), wherein by displacement of the respective phase voltages (70, 72, 74) as a result of the overlaying voltage, a stress on the switching elements (40 to 56) is distributed more evenly to all switching elements (40 to 56) of the multilevel energy converter (28), wherein the AC voltage signal is a sinusoidal or trapezoidal AC voltage signal.

2. Method according to claim 1, **characterised in that** the overlaying occurs when a frequency of the desired voltage signals (64, 66, 68) is less than a predetermined comparison frequency.

3. Method according to one of the preceding claims,
**characterised in that** the overlaying occurs when an amplitude of the desired voltage signals (64, 66, 68) is less than a predetermined comparison amplitude.

4. Method according to one of the preceding claims,
**characterised in that** temperatures of the switching elements (40 to 56) are determined and the overlaying voltage signal (86) is set as a function of the temperatures determined.

5. Method according to one of the preceding claims,
**characterised in that** aging states of the switching elements (40 to 56) are determined and the overlaying voltage signal (86) is set as a function of the aging states determined.

6. Method according to one of the preceding claims,
**characterised in that** an amplitude and/or a frequency of the AC voltage signal is set as a function of a thermal time constant of the switching elements (40 to 56).

7. Method according to one of the preceding claims,
**characterised in that** the AC voltage signal is a trapezoidal AC voltage signal.

8. Control unit (38) for controlling switching elements (40 to 56) of a multilevel energy converter (28) using at least three electric potentials (22, 24, 26), which is embodied for connection to a multiphase electrical machine (30), wherein the control unit (38) is embodied to operate the switching elements (40 to 56) of the multilevel energy converter (28) by means of corresponding switching signals (70, 72, 74) in a predefined clock mode, for which purpose the control unit (38) determines the switching signals (70, 72, 74) for the switching elements (40 to 56) assigned to a respective one of the phases as a function of a respective desired voltage signal (64, 66, 68), in order to apply a respective phase voltage (70, 72, 74) to each phase (U, V, W) of the multiphase electrical machine (30), wherein the control unit (38) is further embodied to determine the switching signals (70, 72, 74) additionally as a function of a predefined overlaying voltage signal (86), in order to overlay the respective phase voltages (64, 66, 68) with an overlaying voltage dependent on the overlaying voltage signal (86), **characterisedin** that the control unit (38) is embodied to perform a method according to one of claims 1 to 7.

9. Multilevel energy converter (28), which is embodied for connection to a multiphase electrical machine (30) and which uses at least three electric potentials (22, 24, 26), with:
- Switching elements (40 to 56) for applying a respective phase voltage (70, 72, 74) to each phase (U, V, W) of the multiphase electrical machine (30), and
- A control unit (38) for controlling the switching elements (40 to 56) in a predefined clock mode by means of corresponding switching signals,
**characterised in that** the control unit (38) is embodied in accordance with claim 8.

10. Drive facility (10) with:
- A multiphase electrical machine (30), and
- A multilevel energy converter (28) connected to the multiphase electrical machine (30), which uses at least three electric potentials (22, 24, 26),
**characterised in that** the multilevel energy converter (28) is embodied in accordance with claim 9.

## Revendications

1. Procédé pour faire fonctionner des éléments (40 à 56) de commutation d'un convertisseur (28) d'énergie à plusieurs niveaux, utilisant au moins trois potentiels (22, 24, 26) électriques et auquel est raccordée une machine (30) électrique polyphasée, dans lequel on fait fonctionner des éléments (40 à 56) de commutation du convertisseur (28) d'énergie à plusieurs niveaux au moyen de signaux (70, 72, 74) de commutation correspondants dans un fonctionnement cadencé donné à l'avance, dans lequel on détermine les signaux (70, 72, 74) de commutation pour les éléments (40 à 56) de commutation affectés à l'une respective des phases (U, V, W), en fonction d'un signal (64, 66, 68) de tension de consigne respectif, afin d'appliquer, à chaque phase de la machine (30) électrique polyphasée, une tension (70, 72, 74) de phase respective, dans lequel on détermine les signaux de commutation supplémentairement en fonction d'un signal (86) de tension de superposition donné à l'avance, de manière à superposer, aux tensions (70, 72, 74) respectives de phase, une tension de superposition, qui dépend du signal (86) de tension de superposition, dans lequel on utilise comme signal (86) de tension de superposition un signal de tension alternative, dans lequel on forme le signal de tension alternative, de manière à ce que la charge se répartisse cycliquement sur les potentiels (22, 24, 26) électriques et leurs éléments (40 à 56) de commutation, dans lequel en décalant les tensions (70, 72, 74) respectives de phase on répartit, en raison de la tension de superposition, une charge des éléments (40 à 56) de commutation uniformément sur l'ensemble des éléments (40 à 56) de commutation du convertisseur (28) d'énergie à plusieurs niveaux, dans lequel le signal de tension alternative est un signal sinusoïdal ou trapézoïdal de tension alternative.

2. Procédé suivant la revendication 1, **caractérisé en ce que** la superposition a lieu, lorsqu'une fréquence des signaux (64, 66, 68) de tension de consigne est plus basse qu'une fréquence de comparaison donnée à l'avance.

3. Procédé suivant l'une des revendications précédentes, **caractérisé en ce que** la superposition a lieu, lorsqu'une amplitude des signaux (64, 66, 68) de tension de consigne est plus petite qu'une amplitude de comparaison donnée à l'avance.

4. Procédé suivant l'une des revendications précédentes, **caractérisé en ce que** l'on détermine des températures des éléments (40 à 56) de commutation et on règle le signal (86) de tension de superposition en fonction des températures déterminées.

5. Procédé suivant l'une des revendications précédentes, **caractérisé en ce que** l'on détermine des états de vieillissement des éléments (40 à 56) de commutation et on règle le signal (86) de tension de superposition en fonction des états de vieillissement déterminés.

6. Procédé suivant l'une des revendications précédentes, **caractérisé en ce que** l'on règle une amplitude et/ou une fréquence du signal de tension alternative en fonction d'une constante de temps thermique des éléments (40 à 56) de commutation.

7. Procédé suivant l'une des revendications précédentes, **caractérisé en ce que** le signal de tension alternative est un signal trapézoïdal de tension alternative.

8. Unité (38) de commande pour la commande d'éléments (40 à 56) de commutation d'un convertisseur (28) d'énergie à plusieurs niveaux utilisant au moins trois potentiels (22, 24, 26) électriques et constitué pour se raccorder à une machine (30) électrique polyphasée, dans laquelle l'unité (38) de commande est constituée pour faire fonctionner les éléments (40 à 56) de commutation du convertisseur (28) d'énergie à plusieurs niveaux au moyen de signaux (70, 72, 74) de commutation correspondants dans un fonctionnement cadencé donné à l'avance, à quelle fin l'unité (38) de commande détermine les signaux (70, 72, 74) de commutation pour les éléments (40 à 56) de commande affectés à une respective des phases en fonction d'un signal (64, 66, 68) respectif de tension de consigne, afin d'appliquer, à chaque phase (U, V, W) de la machine (30) électrique polyphasée, une tension (70, 72, 74) respective de phase, dans laquelle l'unité (38) de commande est constituée en outre pour déterminer les signaux (70, 72, 74) de commutation supplémentairement en fonction d'un signal (86) de tension de superposition donné à l'avance, afin de superposer, aux tensions (64, 66, 68) respectives de phase, une tension de superposition, qui dépend du signal (86) de tension de superposition, **caractérisée en ce que** l'unité (38) de commande est constituée pour effectuer un procédé suivant l'une des revendications 1 à 7.

9. Convertisseur (28) d'énergie à plusieurs niveaux, qui est constitué pour se raccorder à une machine (30) électrique polyphasée et qui utilise au moins trois potentiels (22, 24, 26) électriques comprenant :
- des éléments (40 à 56) de commutation pour l'application d'une tension (70, 72, 74) respective de phase à chaque phase (U, V, W) de la machine (30) électrique polyphasée et
- une unité (38) de commande pour la commande des éléments (40 à 56) de commutation dans un fonctionnement cadencé donné à l'avance, au moyen de signaux de commutation correspondants,
**caractérisé en ce que** l'unité (38) de commande est constituée suivant la revendication 8.

10. Dispositif (10) d'entraînement comprenant :
- une machine (30) électrique polyphasée et
- un convertisseur (28) d'énergie à plusieurs niveaux, qui est raccordé à la machine (30) électrique polyphasée et qui utilise au moins trois potentiels (22, 24, 26) électriques,
**caractérisé en ce que** le convertisseur (28) d'énergie à plusieurs niveaux est constitué suivant la revendication 9.
